# EUROPEAN PATENT SPECIFICATION

(11) **EP 1 579 126 B1**
(45) Date of publication and mention of the grant of the patent: **16.08.2006**
(21) Application number: 02808267.5
(22) Date of filing: 23.12.2002
(51) Int. Cl.: F16H 61/00, F16H 9/18

(54) **CONTINUOUSLY VARIABLE TRANSMISSION**
STUFENLOS EINSTELLBARE ÜBERTRAGUNG
BOITE DE VITESSES A VARIATION CONTINUE

(43) Date of publication of application: 28.09.2005
(73) Proprietor: Van Doorne's Transmissie B.V., 5000 AM Tilburg (NL)
(72) Inventor: VAN DE MEERAKKER, Koen, Govert, Olivier, NL-5642 LG Eindhoven (NL); ROSIELLE, Petrus, Carolus, Johannes, Nicolaas, NL-5505 AV Veldhoven (NL)
(86) International application number: PCT/EP2002/014851
(87) International publication number: WO 2004/057215

(56) References cited:
- EP-A- 0 582 307
- WO-A-00/60256
- CH-A- 267 770

## Description

The invention relates to a continuously variable transmission of the type having a drive belt associated with two pulleys and electro-mechanical actuation means for actuating an axially displaceable disc of the pulleys according to the preamble of claim 1. A pulley provided with this type electro-mechanical actuation means is known from the international application WO-A-00/60256 and includes an electric motor, a double planetary gear system and a transforming mechanism for transforming a rotation of the motor into a linear, i.e. axial motion of the displaceable disc of the respective pulley. By the operation of the motor, possibly by means of a computer operating in accordance with a control algorithm, the displaceable disc is actuated and an axial separation between the pulley discs may be influenced.

The transmission is operated in dependency of control parameters such as a torque to be transmitted between the pulleys and a desired value for the transmission ratio. These control parameters are used to determine a required actuation of the displaceable disc or discs of each of the pulleys, whereby the drive belt experiences a clamping force. Hereby, the level of respective clamping force exerted on the drive belt by the discs of a pulley determines a maximum torque level that can be transmitted by means of friction, hereinafter denoted the transmittable torque. The transmittable torque and the transmission ratio may favourably be actively controlled independently from one another, each using the actuation means of separate pulleys.

Although such transmission incorporating these known pulleys would appear to function satisfactorily per se, its efficiency may be improved by allowing for a transfer of energy between the pulleys during a change of the transmission ratio, which feature may be understood as follows. During operation of the transmission the drive belt is tensioned as it is urged in a radially outward direction on both pulleys under the influence of the said damping forces. Thus, when the transmission ratio is changed by the simultaneous adjustment of the radial position of the drive belt in each pulley by moving the axially displaceable disc of each pulley in mutually opposite directions, energy is released at the pulley where the pulley discs move away from each other as the tension in the drive belt assists such movement, whereas at the pulley where the discs move towards each other such movement is opposed by the tension in the drive belt and energy is consumed. Accordingly, the efficiency of the actuation means and thereby of the transmission may be improved by providing means for transferring the energy released at one pulley to the respective other pulley.

This latter feature and means are known as such from the European patent publication EP-A-0 582 307. In this alternative construction, however, only the transmission ratio is controlled actively, whereas the respective clamping forces are passively effected in dependence on the actual torque level at each pulley with a cam mechanism including a stationary race and tapered rollers. Therefore, this transmission has the disadvantage that clamping force at each pulley shows a fixed dependency on the torque level. In contemporary transmission design and in particular in the automotive use thereof, a higher degree of controllability is generally desired. More in particular and as an example, it is considered that a safety factor between the clamping force minimally required to transmit a certain torque level and the clamping force that is actually applied in response thereto, preferably can be adapted to the operational conditions as is described in the European patent application EP-A-1 167 839. Moreover, the known design required both discs of each pulley to be displaceable, i.e. one to influence the transmission ratio and one to influence the transmittable torque, which represents a complex and costly construction with respect to a transmission having only one displaceable disc per pulley, which is presently the most preferred in the automotive application.

It is remarked that in a transmission with the pulleys known from the earlier discussed international application, the said transfer of energy would in principle be possible, i.e. by using the electric motor of the actuation means of the energy releasing pulley as a generator providing electric power to the actuation means of the electric motor of respective other pulley. However, the required energy conversions and efficiency losses inherent therewith would limit the overall effectiveness of such construction.

It is an object of the present invention to provide for a mechanically actuated continuously variable transmission allowing the active and independent control of the transmittable torque and the transmission ratio and having an improved efficiency by allowing the transfer of mechanical energy between the pulleys during a transmission ratio change. It is a further object of the invention to provide for favourably designed mechanical actuation means, improving, i.e. reducing, the required building space and cost thereof.

According to the invention the first mentioned object is realised in a transmission having the features of the characterising portion of claim 1. In the transmission according to the invention the desired torque and ratio control may be effected actively and independently without compromising the favoured mechanical interconnection between the displaceable disc of the pulleys. Hereby, the design and operation of displacement system associated with the pulleys of the transmission per se is discussed in WO-A-00/60256.

In the transmission according to the invention it is realised with surprisingly simple means, advantageously without a major change to the known pulley design, that the displacement systems of the pulleys may be mechanically interconnected allowing the transfer of energy there between during a transmission ratio change. A transmission ratio change is thereby effected by the activation of the ratio control motor that simultaneously drives the third component of the second gear set of each displacement system, whereas when the ratio control motor is stopped, or even mechanically locked to save the electrical power that would otherwise be consumed by the motor to generate a stopping torque, the transmission ratio remains constant. With the controlled activation of the torque control motor the clamping forces experienced by the drive belt between the discs of the pulleys and thus the transmittable torque is influenced in accordance with a selected control strategy.

During a steady state operation of the transmission, when the clamping forces are essentially constant, also the torque control motor may be mechanically locked to save electrical power. In this case a rotational spring should preferably be provided between the torque control motor and the third component whereto it is drivingly connected, to still allow the actuation means to accommodate geometric tolerances.

According to the invention a further spring may be used to provide an initial clamping force on the drive belt, whereby the drive belt is kept tensioned when the control motors are switched off from a source of electrical power or at a failure thereof and whereby the said rotational spring can serve as said further spring. Also, a compression spring provided between the transforming mechanism and the displaceable disc, or, alternatively, between the said third component drivingly connected to the torque control motor and the transmission housing, i.e. in parallel with the torque control motor, can serve as the said further spring.

As is mentioned in the above, the design of the actuation means is relatively stiff and only a slight rotation of the torque control motor will generally cause the clamping forces to increase rapidly. Therefore, the actual rotation of the torque control motor during operation will actually be relatively small and the motor is mainly employed to generate a torque, i.e. to apply an axially oriented force on the displaceable disc through the transforming mechanism. Still, as is for example known from the earlier discussed European publication, in a typical transmission the axial displacement of the displaceable discs at a transmission ratio change, which is referred to as the stroke of the discs, do not exactly match. A rotation of the torque control motor is required to accommodate for such mismatch.

It is remarked that in the automotive application of the transmission it will often be preferred that the primary pulley is drivingly connected to a vehicle engine and that the secondary pulley is drivingly connected to driven wheels of the vehicle. This needs, however, not be the case necessarily. It is further remarked that neither the ratio control motor nor the torque control motor need necessarily be powered electrically, but may also be powered otherwise for example hydraulically.

Although the third component of the second gear set of the displacement system associated with the secondary pulley could in principle be drivingly connected to a further electric motor for an independent control of the clamping force at the primary pulley, according to the invention such further control possibility would be superfluous. According to the invention a cost effective and relatively simple construction is realised if the last mentioned third component is provided in the transmission rotationally fixed, e.g. connected to a housing of the transmission.

Generally such a transmission housing is provided encompassing the pulleys and the drive belt whereby the primary and the secondary shafts extend through a wall of the housing, at least serving to hold a lubrication and/or cooling fluid of the transmission. In such transmission it is, according to the invention, advantageous to locate at least one of the ratio control and the torque motors outside the transmission housing, whereby the respective control motor is drivingly connected to the respective component of the gear sets by a drive shaft extending through a hole in the transmission housing. With this measure the temperature of the respective motor can be kept relatively low, not in the least because it does not arrive into contact with the transmission lubrication and cooling fluid. Typically, the temperature inside the transmission housing during operation is about 50-60 degrees higher than outside.

The invention will now be described in greater detail with reference to the figures that illustrate a preferred embodiment of the transmission, wherein the said first component of the first and second gear sets is the ring gear thereof, the said second component is the sun gear thereof and the said third component is the planet carrier thereof.
Figure 1 provides a diagrammatic overview of the preferred embodiment of the actuation means according to the invention.
Figure 2 provides a partial cross section of a physical embodiment of a transmission according to the invention illustrating several advantageous aspects thereof.
Figure 3 illustrates a detailed embodiment of the transmission according to the invention.

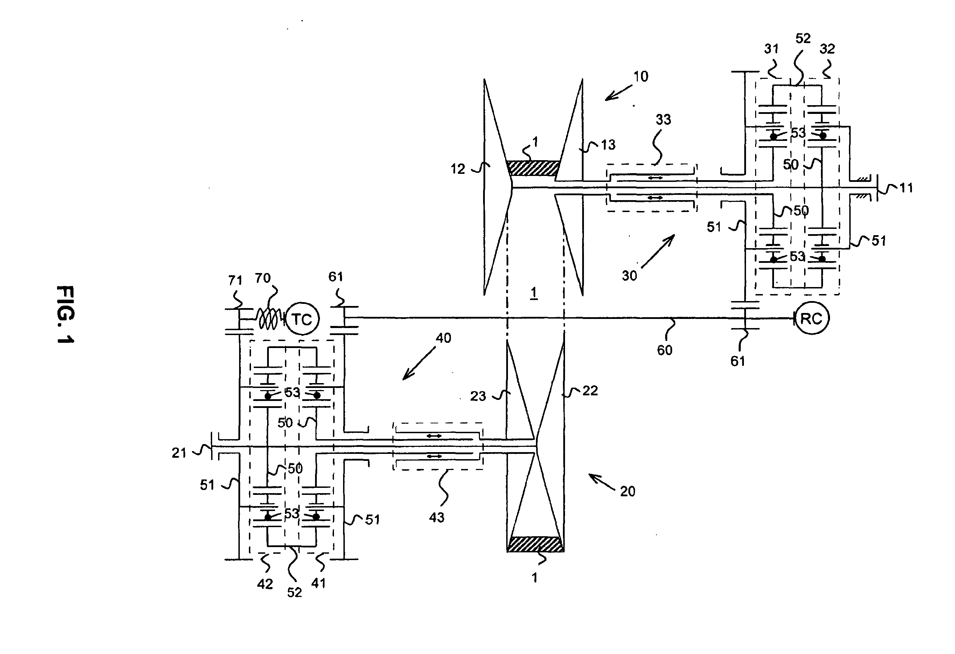

In figure 1 a continuously variable transmission is shown having a drive belt 1 trained around a primary pulley 10 on a primary shaft 11, which typically is drivingly connected to an engine, and a secondary pulley 20 on a secondary shaft 21, which typically is drivingly connected to a load. Each pulley 10, 20 is provided with a first disc 12, 22, which is fixed to the respective shaft 11, 21, and a second or displaceable disc 13, 23, which is axially movable with respect to the respective shaft 11, 21 and is rotationally locked thereto, for example by means of a spline connection. Electro-mechanical actuation means are provided for the actuation of the displaceable discs 13 and 23, which comprise at least a ratio control motor RC and two displacement systems 30 and 40, each associated with one pulley 10, 20.

The displacement systems 30 and 40 are each provided with a double planetary gearing 31, 32, 41, 42 and a transforming mechanism 33, 43, which mechanism 33, 43 is operatively connected to the respective displaceable pulley disc 13, 23 and to the double planetary gearing 31, 32, 41, 42 for translating a rotation thereof into a linear motion of the disc 13, 23. Suitable transforming mechanism types are generally known in the art, for example from EP-A-1 158 207, WO-A-00/49313 and from the above mentioned publications. Hereby each double planetary gearing 31, 32 and 41, 42 respectively is provided with a first gear set 31, 41 and a second gear set 32, 42 each comprising three concentrically rotating components 50, 51 and 52, being a central sun gear 50, a planet carrier 51 bearing a number of rotatably planetary gears 53 that engage the sun gear 50 and a ring gear 52 surrounding and engaging the planetary gears 53.

In the preferred embodiment of the transmission according to the invention a first of these concentrically rotating components 50, 51 and 52, i.e. the ring gear 52, of the first gear set 31, 41 of both displacement systems 30 and 40 is directly connected to the ring gear 52 of the second gear set 32, 42. A second of the said components 50, 51 and 52, i.e. the sun gear 50, of the first gear set 31, 41 of both displacement systems 30 and 40 is directly connected to the transforming mechanism 33, 43 and the corresponding sun gear 50 of the second gear set 32, 42 is directly connected to the pulley shaft 11, 21 of the respective pulley 10, 20. Finally, a third of the said components 50, 51 and 52, i.e. the planet carrier 51, of the first gear set 31, 41 of both displacement systems 30 and 40 is drivingly connected to the ratio control motor RC and the corresponding planet carrier 51 of the second gear set 42 of the displacement system 40 associated with the secondary pulley 20 is drivingly connected to a torque control motor TC by means of a rotational spring 70 and a driving gear 71 of the actuation means, whereas the corresponding planet carrier 51 of the second gear set 32 of the displacement system 30 associated with the primary pulley 10 is rotationally fixed. In this embodiment the ratio control motor RC is drivingly connected to the planet carriers 51 of the second gear sets 32 and 42, by means of a connecting shaft 60 and driving gears 61 of the actuation means.

The design and function of the displacement systems 30 and 40 is known per se, whereby the main benefit of applying the double planetary gearing 31, 32, 41, 42 is that the motor is required to rotate only when the displaceable discs 13 and 23 are adjusted, i.e. when a transmission ratio change is effected, and at this time energy may be transferred between the displacement systems 30 and 40 through the mechanical connection there between, formed by the connecting shaft 60 and the driving gears 61. When no such adjustment is required the ratio control motor RC still has to provide a stopping torque to stop the planet carrier 51 from rotating, in which case the motor RC may be locked to conserve energy.

Also, by a controlled activation of the torque control motor TC the clamping force at the secondary pulley 20 is set thus influencing the transmittable torque of the transmission. Hereby, the said controlled activation may advantageously incorporate a feed-back loop wherein an actually measured clamping force is compared with a desired value therefor and the activation of the torque control motor TC is adjusted in accordance with the result thereof.

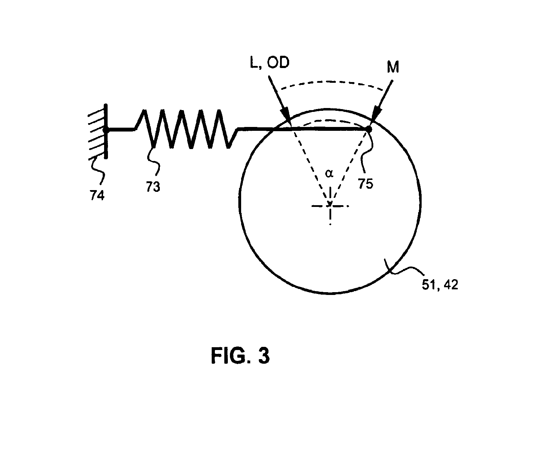

During the ratio change the planet carrier 51 of the of the second gear set 42 of the secondary displacement system 40 is required to rotate to accommodate a mismatch between the strokes of the separate displaceable discs 13 and 23, between a Medium-position M wherein the transmission ratio is 1, and a Low- or Overdrive-position L,OD wherein the transmission ratio is at its smallest or largest value respectively. In a detailed embodiment of the invention that is illustrated in figure 3, such feature is used to further optimise the efficiency of the transmission. In this embodiment a further spring 73 is provided, one side 74 whereof is fixed, e.g. to the transmission housing, relative to the other side 75 thereof that is attached to the planet carrier 51 of the second gear set 42 of the secondary displacement system 40, i.e. more or less in parallel with the torque control motor TC. The further spring 73 is preloaded and exerts a tangentially oriented force on said latter planet carrier 51 as a result whereof in the Medium-position a basic clamping force is exerted on the belt 1 by the secondary pulley 20. The further spring 73 is dimensioned such that, when the transmission ratio changes towards Low- or OD-position, an increase of the clamping force that is required in these conditions, is at least partly generated by the additional loading of the further spring 73 due to the, albeit relatively small, rotation of the said latter planet carrier 51. In this embodiment, the torque control motor TC is required only to modulate, i.e. to strengthen or weaken, the basic force exerted by the further spring 73 so that, ultimately, the appropriate clamping force is exerted on the belt 1. This feature favourably allows the torque control motor TC to be dimensioned smaller and/or to be operated more efficiently. Additionally, at possible failure of the torque control motor TC a basic, but advantageously variable clamping force is available.

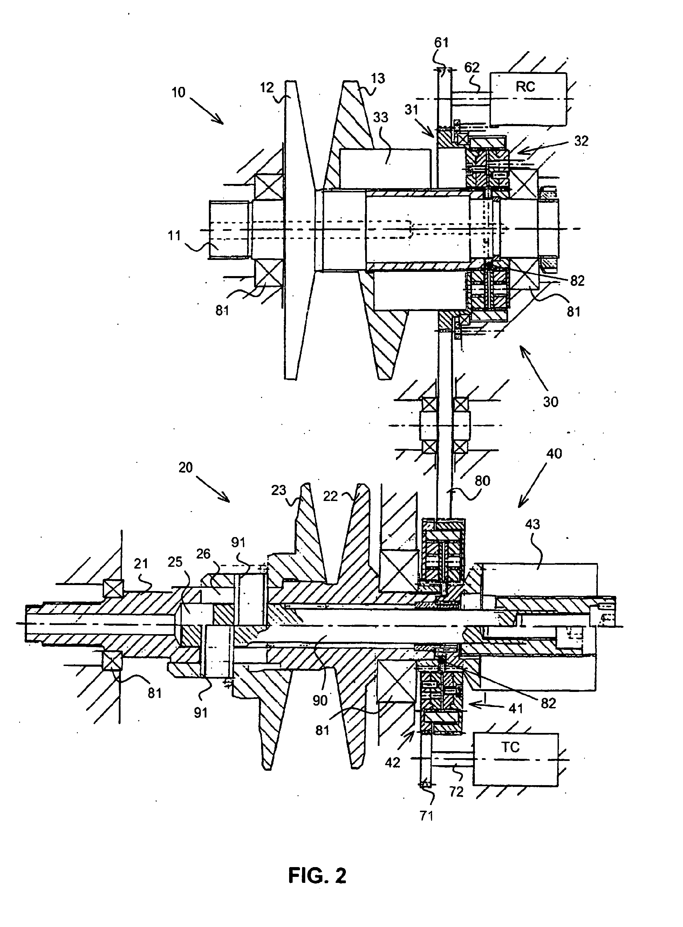

From figure 1 it appears that the transmission requires a considerable axial building space to accommodate the displacement systems 30 and 40, because the displaceable discs 13 and 23 are typically provided on opposite sides of the belt 1. Moreover, the connecting shaft 60 increases the radial building space of the transmission, because it needs to cross the pulleys 10 and 20 and drive belt 1. The invention, therefore, also provides for a physical embodiment of the transmission that is depicted in figure 2, which requires considerably less building space both in axial and in radial direction.

In the embodiment of figure 2, the displacement systems 30 and 40 are provided on the same side of the pulleys 10 and 20, i.e. in case of the primary pulley 10 on the side of the axially displaceable disc 13 and in case of the secondary pulley 20 on the side of the disc 22 that is fixed to the secondary shaft 21. To this end, the transforming mechanism 43 of the displacement system 40 of the secondary pulley 20 is provided with a connecting rod 90 that extends predominantly axially inside a bore 25 of the secondary pulley shaft 21 and that has a radially oriented dog part 91 extending through a radial opening 26 of the secondary pulley shaft 21 and engaging the displaceable disc 23 thereof. The shafts 11 and 21 are born in a transmission housing through radial bearing means 81, whereas an axial bearing means 82 is provided between the first gear set 31, 41 and the second gear set 32, 42 of each displacement system 30, 40.

According to a further aspect of the invention that is in figure 2, the planet carriers 51 of the second gear sets 32 and 42 of the displacement systems 30 and 40 are rotationally connected means of an intermediate gear wheel 80 of the actuation means. According to the invention the intermediate gear wheel 80 may be directly driven by the ratio control motor RC. In the embodiment of figure 2, however, the ratio control motor RC is connected to the displacement system 30 of the primary pulley 10 through a separate driving gear 61 and the torque control motor TC is connected to the displacement system 40 of the secondary pulley 10 through another driving gear 71.

According to yet a further aspect of the invention that is also illustrated in figure 2, the ratio control motor RC and the torque control motor TC are each connected to their respective driving gear 61, 71 through respective driving shafts 62 and 72, thereby allowing the motors RC, TC to be located outside a housing of the transmission.

## Claims

1. Continuously variable transmission comprising a primary pulley (10) provided on a primary shaft (11) of the transmission, a secondary pulley (20) provided on a secondary shaft (21) of the transmission and a drive belt (1) trained around the pulleys (10, 20), whereby each pulley (10; 20) is provided with two discs (12, 13; 22, 23) at least one (13; 23) of which is axially displaceable with respect to the respective pulley shaft (11; 21) under the influence of electro-mechanical actuation means of the transmission, which actuation means at least comprise a ratio control motor (RC) and two displacement systems (30, 40), each associated with one pulley (10; 20) and each provided with a double planetary gearing (31, 32; 41, 42) and a transforming mechanism (33; 43) that is operatively connected to the respective displaceable pulley disc (13; 23) and to the respective double planetary gearing (31, 32; 41, 42) for translating a rotation thereof into a linear motion of the said respective disc (13; 23), whereby each double planetary gearing (31, 32; 41, 42) is provided with a first gear set (31; 41) and a second gear set (32; 42), each set (31, 32, 41, 42) comprising three concentrically rotating components (50, 51, 52), being a central sun gear (50), a planet carrier (51) bearing a number of rotatably planetary gears (53) that engage the sun gear (50) and a ring gear (52) surrounding and engaging the planetary gears (53), a first (52) of the said components (50, 51, 52) of the first gear set (31; 41) being directly connected to a corresponding first component (52) of the second gear set (32; 42), a second (50) of the said components (50, 51, 52) of the first gear set (31; 41) being directly connected to the respective transforming mechanism (33; 43) and a corresponding second component (50) of the second gear set (32; 42) being directly connected to the pulley shaft (11; 21) of the respective pulley (10, 20), **characterised in that** a third (51) of the said components (50, 51, 52) of the first gear set (31; 41) of both displacement systems (30, 40) is drivingly connected to the ratio control motor (RC) and **in that** a corresponding third component (51) of the second gear set (42) of the displacement system (40) associated with the secondary pulley (20) is drivingly connected to a torque control motor (TC).

2. Continuously variable transmission according to claim 1, **characterised in that** a third component (51) of the second gear set (32) of the displacement system (30) associated with the primary pulley (10), which corresponds to the said third component (51) of the first gear set (31, 41) that is drivingly connected to the ratio control motor (RC), is rotationally fixed.

3. Continuously variable transmission according to claim 1 or 2, **characterised in that** the said first gear set component (52) is the ring gear (52) thereof, the said second gear set component (50) is the sun gear (50) thereof and the said third gear set component (51) is the planet carrier (51) thereof.

4. Continuously variable transmission according to any one of the preceding claims, **characterised in that** at least one of the ratio control motor (RC) and the torque control motor (TC) is located outside a transmission housing, which housing completely encompasses the pulleys (10, 20) and the drive belt (1) at least for holding a lubrication and/or cooling fluid of the transmission, whereby the respective control motor (RC; TC) is drivingly connected to the respective gear set component (51) by a respective drive shaft (62; 72) extending through a hole in the transmission housing.

5. Continuously variable transmission according to any one of the preceding claims, **characterised in that** the third components (51) of the first gear set (31; 41) of both displacement systems (30, 40) are drivingly connected through an intermediate gear wheel (80) of the actuation means.

6. Continuously variable transmission according to claim 5, **characterised in that** the intermediate gear wheel (80) is directly driven by the ratio control motor (RC).

7. Continuously variable transmission according to any one of the preceding claims, **characterised in that** a rotational spring (70) is provided between the torque control motor (TC) and the gear set component (51) of the displacement system (40) associated with the secondary pulley (20) that is drivingly connected thereto.

8. Continuously variable transmission according to any one of the preceding claims, **characterised in that** a preloaded further spring (70, 73) is provided for effecting an initial clamping force on the belt (1) by urging the displaceable pulley disc (13; 23) of a pulley (10, 20) to the respective other pulley disc (12, 22).

9. Continuously variable transmission according to claim 8, **characterised in that** one side (74) of the further spring (73) is fixed, e.g. to the transmission housing, relative to the other side (75) thereof that is attached to the planet carrier (51) of the second gear set (42) of the displacement system (40) of the respective pulley (20) and which further spring (73) exerts a tangentially oriented force on the said latter planet carrier (51).

10. Continuously variable transmission according to any one of the preceding claims, **characterised in that** the transforming mechanism (33; 43) of at least one pulley (20) is provided with a connecting rod (90) that extends predominantly axially inside a bore (25) of the pulley shaft (21) of the respective pulley (20) and that is provided radially oriented engaging dog (91) extending through an opening (26) of the said pulley shaft (21) and engaging the respective displaceable disc (23).

## Patentansprüche

1. Stufenloses Getriebe, das eine auf einer Primärwelle (11) des Getriebes vorgesehene Primärrolle (10), eine auf einer Sekundärwelle (21) des Getriebes vorgesehene Sekundärrolle (20) und einen um die Rollen (10, 20) herumgeführten Antriebsriemen (1) umfasst, wobei jede Rolle (10; 20) mit zwei Scheiben (12, 13; 22, 23) versehen ist, von denen mindestens eine (13; 23) unter dem Einfluss von elektro-mechanischen Betätigungsmitteln des Getriebes bezüglich der jeweiligen Rollenwelle (11; 21) axial verschiebbar ist, wobei die Betätigungsmittel mindestens einen Übersetzungssteuermotor (RC) und zwei Verschiebungssysteme (30, 40) umfassen, die jeweils einer Rolle (10; 20) zugeordnet und mit einem Doppelplanetengetriebe (31, 32; 41, 42) und einem Umwandlungsmechanismus (33; 43) versehen sind, der mit der jeweiligen verschiebbaren Rollenscheibe (13; 23) und mit dem jeweiligen Doppelplanetengetriebe (31, 32; 41, 42) wirkverbunden ist, um eine Drehung davon in eine Linearbewegung der jeweiligen Scheibe (13; 23) umzuwandeln, wobei jedes Doppelplanetengetriebe (31, 32; 41, 42) mit einem ersten Zahnradsatz (31; 41) und einem zweiten Zahnradsatz (32; 42) versehen ist, wobei jeder Satz (31, 32, 41, 42) drei konzentrisch drehende Komponenten (50, 51, 52) umfasst, bei denen es sich um ein mittleres Sonnenrad (50), einen Planetenradträger (51), der mehrere drehbare Planetenräder trägt (53), die mit dem Sonnenrad (50) in Eingriff stehen, und ein die Planetenräder (53) umgebendes und in Eingriff nehmendes Tellerrad (52) handelt, wobei eine erste (52) der Komponenten (50, 51, 52) des ersten Zahnradsatzes (31; 41) direkt mit einer entsprechenden ersten Komponente (52) des zweiten Zahnradsatzes (32; 42) verbunden ist, eine zweite (50) der Komponenten (50, 51, 52) des ersten Zahnradsatzes (31;41) direkt mit dem jeweiligen Umwandlungsmechanismus (33; 43) verbunden ist und eine entsprechende zweite Komponente (50) des zweiten Zahnradsatzes (32; 42) direkt mit der Rollenwelle (11; 21) der jeweiligen Rolle (10, 20) verbunden ist, **dadurch gekennzeichnet, dass** eine dritte (51) der Komponenten (50, 51, 52) des ersten Zahnradsatzes (31; 41) beider Verschiebungssysteme (30, 40) mit dem Übersetzungssteuermotor (RC) antriebsverbunden ist und dass eine entsprechende dritte Komponente (51) des zweiten Zahnradsatzes (42) des Verschiebungssystems (40), das der Sekundärrolle (20) zugeordnet ist, mit einem Drehmomentsteuermotor (TC) antriebsverbunden ist.

2. Stufenloses Getriebe nach Anspruch 1, **dadurch gekennzeichnet, dass** eine dritte Komponente (51) des zweiten Zahnradsatzes (32) des der Primärrolle (10) zugeordneten Verschiebungssystems (30), die der dritten Komponente (51) des ersten Zahnradsatzes (31, 41) entspricht, die mit dem Übersetzungssteuermotor (RC) antriebsverbunden ist, drehfest verbunden ist.

3. Stufenloses Getriebe nach Anspruch 1 oder 2, **dadurch gekennzeichnet, dass** die erste Zahnradsatzkomponente (52) das Tellerrad (52) davon ist, die zweite Zahnradsatzkomponente (50) das Sonnenrad (50) davon ist und die dritte Zahnradsatzkomponente (51) der Planetenradträger (51) davon ist.

4. Stufenloses Getriebe nach einem der vorhergehenden Ansprüche, **dadurch gekennzeichnet, dass** der Übersetzungssteuermotor (RC) und/oder der Drehmomentsteuermotor (TC) außerhalb eines Getriebegehäuses angeordnet ist, wobei das Gehäuse die Rollen (10, 20) und den Antriebsriemen (1) vollständig umschließt, um zumindest ein Schmiermittel und/oder Kühlfluid des Getriebes festzuhalten, wobei der jeweilige Steuermotor (RC; TC) durch eine jeweilige sich durch ein Loch im Getriebegehäuse erstreckende Antriebswelle (62; 72) mit der jeweiligen Zahnradsatzkomponente (51) antriebsverbunden ist.

5. Stufenloses Getriebe nach einem der vorhergehenden Ansprüche, **dadurch gekennzeichnet, dass** die dritten Komponenten (51) des ersten Zahnradsatzes (31; 41) beider Verschiebungssysteme (30, 40) durch ein Zwischenzahnrad (80) der Betätigungsmittel antriebsverbunden sind.

6. Stufenloses Getriebe nach Anspruch 5, **dadurch gekennzeichnet, dass** das Zwischenzahnrad (80) durch den Übersetzungssteuermotor (RC) direkt angetrieben wird.

7. Stufenloses Getriebe nach einem der vorhergehenden Ansprüche, **dadurch gekennzeichnet, dass** eine Drehfeder (70) zwischen dem Drehmomentsteuermotor (TC) und der damit antriebsverbundenen Zahnradsatzkomponente (51) des der Sekundärrolle (20) zugeordneten Verschiebungssystems (40) vorgesehen ist.

8. Stufenloses Getriebe nach einem der vorhergehenden Ansprüche, **dadurch gekennzeichnet, dass** eine vorbelastete weitere Feder (70, 73) vorgesehen ist, um eine Anfangsklemmkraft am Riemen (1) zu bewirken, indem sie die verschiebbare Rollenscheibe (13; 23) einer Rolle (10, 20) zur jeweiligen anderen Rollenscheibe (12, 22) drängt.

9. Stufenloses Getriebe nach Anspruch 8, **dadurch gekennzeichnet, dass** eine Seite (74) der weiteren Feder (73) festgelegt ist, zum Beispiel am Getriebegehäuse, bezüglich ihrer anderen Seite (75), die am Planetenradträger (51) des zweiten Zahnradsatzes (42) des Verschiebungssystems (40) der jeweiligen Rolle (20) angebracht ist, und wobei die weitere Feder (73) eine tangential ausgerichtete Kraft auf den letzteren Planetenradträger (51) ausübt.

10. Stufenloses Getriebe nach einem der vorhergehenden Ansprüche, **dadurch gekennzeichnet, dass** der Umwandlungsmechanismus (33; 43) mindestens einer Rolle (20) mit einer Verbindungsstange (90) versehen ist, die sich in erster Linie axial in einer Bohrung (25) der Rollenwelle (21) der jeweiligen Rolle (20) erstreckt und die mit einem radial ausgerichteten Eingriffsmitnehmer (91) versehen ist, der sich durch eine Öffnung (26) der Rollenwelle (21) erstreckt und die jeweilige verschiebbare Scheibe (23) in Eingriff nimmt.

## Revendications

1. Transmission variable en continu comprenant une poulie primaire (10) prévue sur un arbre primaire (11) de la transmission, une poulie secondaire (20) prévue sur un arbre secondaire (21) de la transmission et une courroie d'entraînement (1) courant autour des poulies (10 ; 20), par quoi chaque poulie (10 ; 20) est pourvue de deux disques (12, 13 ; 22, 23) dont au moins l'un (13 ; 23) est déplaçable axialement par rapport à l'arbre de poulie respectif (11 ; 21) sous l'influence d'un moyen d'actionnement électromécanique de la transmission, lequel moyen d'actionnement comprend au moins un moteur de commande de rapport (ratio control - RC) et deux systèmes de déplacement (30, 40), chacun étant associé à une poulie (10 ; 20) et chacun étant pourvu d'un double engrenage planétaire (31, 32 ; 41, 42) et d'un mécanisme de transformation (33 ; 43) qui est raccordé de manière à être opérationnel au disque de poulie déplaçable (13 ; 23) respectif et au double engrenage planétaire respectif (31, 32 ; 41, 42) pour traduire une rotation de celui-ci en un mouvement linéaire dudit disque respectif (13 ; 23), par quoi chaque double engrenage planétaire (31, 32 ; 41, 42) est pourvu d'un premier engrenage (31 ; 41) et d'un deuxième engrenage (32 ; 42), chaque engrenage (31, 32, 41, 42) comprenant trois composants concentriquement rotatifs (50, 51, 52), à savoir une roue solaire centrale (50), un porte-satellite (51) supportant un certain nombre de roues planétaires pouvant tourner (53) qui sont en prise avec la roue solaire (50), et une roue annulaire (52) entourant et en prise avec les roues planétaires (53), un premier (52) desdits composants (50, 51, 52) du premier engrenage (31 ; 41) étant raccordé directement à un premier composant correspondant (52) du deuxième engrenage (32 ; 42), un deuxième (50) desdits composants (50, 51, 52) du premier engrenage (31 ; 41) étant raccordé directement au mécanisme de transformation respectif (33 ; 43) et un deuxième composant correspondant (50) du deuxième engrenage (32 ; 42) étant directement raccordé à l'arbre de poulie (11 ; 21) de la poulie respective (10 ; 20), **caractérisée en ce qu'**un troisième (51) desdits composants (50, 51, 52) du premier engrenage (31 ; 41) des deux systèmes de déplacement (30, 40) est raccordé au moteur de commande de rapport (RC) en pouvant l'entraîner et **en ce qu'**un troisième composant correspondant (51) du deuxième engrenage (42) du système de déplacement (40) associé à la poulie secondaire (20) est raccordé à un moteur de commande de couple (torque control - TC) en pouvant l'entraîner.

2. Transmission variable en continu selon la revendication 1, **caractérisée en ce que** le troisième composant (51) du deuxième engrenage (32) du système de déplacement (30) associé à la poulie primaire (10), qui correspond audit troisième composant (51) du premier engrenage (31, 41) qui est raccordé au moteur de commande de rapport (RC) en pouvant l'entraîner, est fixé de manière à pouvoir tourner.

3. Transmission variable en continu selon la revendication 1 ou 2, **caractérisée en ce que** ledit premier composant (52) de l'engrenage en est la roue annulaire (52), ledit deuxième composant (50) de l'engrenage en est la roue solaire (50) et ledit troisième composant (51) de l'engrenage en est le porte-satellite (51).

4. Transmission variable en continu selon l'une quelconque des revendications précédentes, **caractérisée en ce qu'**au moins l'un du moteur de commande de rapport (RC) et du moteur de commande de couple (TC) est situé en dehors d'un logement de transmission, lequel logement englobe complètement les poulies (10, 20) et la courroie d'entraînement (1) au moins pour contenir un liquide de lubrification et/ou de refroidissement de la transmission, par quoi le moteur de commande respectif (RC ; TC) est raccordé au composant d'engrenage respectif (51) en pouvant l'entraîner par un axe d'entraînement respectif (62 ; 72) s'étendant à travers un trou dans le logement de la transmission.

5. Transmission variable en continu selon l'une quelconque des revendications précédentes, **caractérisée en ce que** les troisièmes composants (51) du premier engrenage (31 ; 41) des deux systèmes de déplacement (30, 40) sont raccordés en pouvant l'entraîner par une roue d'engrenage intermédiaire (80) du moyen d'actionnement.

6. Transmission variable en continu selon la revendication 5, **caractérisée en ce que** la roue d'engrenage intermédiaire (80) est entraînée directement par le moteur de commande de rapport (RC).

7. Transmission variable en continu selon l'une quelconque des revendications précédentes, **caractérisée en ce qu'**un ressort rotatif (70) est prévu entre le moteur de commande de couple (TC) et le composant (51) de l'engrenage du système de déplacement (40) associé à la poulie secondaire (20) qui y est raccordée en pouvant l'entraîner.

8. Transmission variable en continu selon l'une quelconque des revendications précédentes, **caractérisée en ce qu'**un ressort précontraint supplémentaire (70, 73) est prévu pour exercer une force initiale de pincement sur la courroie (1) en forçant le disque de poulie déplaçable (13 ; 23) d'une poulie (10, 20) vers l'autre disque de poulie respectif (12, 22).

9. Transmission variable en continu selon la revendication 8, **caractérisée en ce qu'**un côté (74) du ressort supplémentaire (73) est fixé, par exemple au logement de la transmission, par rapport à l'autre côté (75) de celui-ci qui est attaché au porte-satellite (51) du deuxième engrenage (42) du système de déplacement (40) de la poulie respective (20) et lequel ressort supplémentaire (73) exerce une force orientée tangentiellement audit dernier support planétaire (51).

10. Transmission variable en continu selon l'une quelconque des revendications précédentes, **caractérisée en ce que** le mécanisme de transformation (33 ; 43) d'au moins l'une des poulies (20) est pourvu d'une broche de raccordement (90) qui s'étend principalement axialement à l'intérieur d'un alésage (25) de l'arbre de poulie (21) de la poulie respective (20) et qu'il est prévu un cliquet d'engagement (91) orienté radialement s'étendant à travers une ouverture (26) dudit arbre de poulie (21) et s'engageant dans le disque de poulie déplaçable respectif (23).
